# EUROPEAN PATENT APPLICATION

(11) **EP 4 461 534 A1**
(43) Date of publication of application: **13.11.2024**
(21) Application number: 23737313.9
(22) Date of filing: 06.01.2023
(51) Int. Cl.: B32B 27/32, B32B 27/28, B65D 30/02, B65D 33/38, B65D 65/40

(54) **PACKAGING BAG LAMINATE, PACKAGING BAG, SPOUTED PACKAGING BAG, AND CONTENT-FILLED SPOUTED PACKAGING BAG**

(30) Priority: 06.01.2022 JP 2022000972
(71) Applicant: Hosokawa Yoko Co., Ltd., Tokyo 102-0084 (JP)
(72) Inventor: ICHIKAWA Toru, Tokyo 102-0084 (JP); SHINOZAKI Kousuke, Tokyo 102-0084 (JP); YOSHIKAWA Katsuyuki, Tokyo 102-0084 (JP); MORI Takamasa, Tokyo 102-0084 (JP); ITO Masahiro, Tokyo 102-0084 (JP)
(74) Representative: Krauns, Christian
(86) International application number: PCT/JP2023/000186
(87) International publication number: WO 2023/132365

(57) **Abstract**

A packaging bag laminate (1) to be used for a packaging bag, a spout-attached packaging bag, and a content-contained spout-attached packaging bag, includes a base layer (10), an intermediate layer (20), and a sealant layer (30) that are laminated in this order, the base layer (10) is a stretched film made of polypropylene, the intermediate layer (20) is a multilayer-coextruded film in which support layers (22, 23) mainly made of polyolefin are laminated on two sides of a gas barrier resin layer (21), and the sealant layer (30) is a film made of one or more materials selected from ethylene homopolymer or ethylene copolymer.

## Description

### [Technical Field]

The present invention relates to a packaging bag laminate, a packaging bag, a spout-attached packaging bag, and a content-contained spout-attached packaging bag.

Priority is claimed on Japanese Patent Application No. 2022-000972, filed January 6, 2022, the content of which is incorporated herein by reference.

### [Background Art]

Conventionally, for packaging bags that contain fluid contents such as liquids such as soft drinks and juices, fluids such as ice creams, jellies, cosmetics, shampoos, conditioners and liquid soaps, and pastes, composite laminates made of plastic films and metal foils have been used to provide them with storage stability and strength to withstand distribution. It is practically difficult to separate such laminates made of a plurality of materials into individual materials, and they are unsuitable for material recycling, so they are thermally recycled.

In recent years, there has been a growing trend to move from thermal recycling to material recycling due to the need to protect the global environment. Therefore, rather than laminates made of different materials, monomaterial laminates made of a single material have been attracting attention.

Patent Document 1 proposes a laminate for spout-attached packaging bags in which a base material subjected to at least one of stretching and electron beam irradiation and a sealant layer are made of an equal material of polyethylene or polypropylene.

### [Citation List]

### [Patent Document]

[Patent Document 1]
Japanese Unexamined Patent Application, First Publication No. 2020-157517

### [Summary of Invention]

### [Technical Problem]

However, although the packaging bag laminate of Patent Document 1 allows facilitating the material recycling, the base layer and the sealant layer are made of an equal material and thus have close melting points, which may lead to problems due to heat shrinkage during the bag production process or the like for producing the packaging bag, and there is a demand for improvements to ensure stable production of the packaging bag.

An object of the present invention is to provide a packaging bag laminate, a packaging bag, a spout-attached packaging bag, and a content-contained spout-attached packaging bag, which are easy to material recycling and can ensure stable production of the packaging bag.

### [Solution to Problem]

The present invention includes the following configurations.

A first aspect of the present invention is a packaging bag laminate, including: a base layer, an intermediate layer, and a sealant layer that are laminated in this order, the base layer is a stretched film made of polypropylene, the intermediate layer is a multilayer-coextruded film including a gas barrier resin layer, and support layers laminated on two sides of the gas barrier resin layer and mainly made of polyolefin, and the sealant layer is a film made of one or more materials selected from ethylene homopolymer or ethylene copolymer.

A second aspect of the present invention is that in the packaging bag laminate of the first aspect, the gas barrier resin layer contains ethylene-vinyl alcohol copolymer.

A third aspect of the present invention is that in the packaging bag laminate of the second aspect, the ethylene-vinyl alcohol copolymer has an ethylene unit content of 20 mol% or more and 70 mol% or less.

A fourth aspect of the present invention is that in the packaging bag laminate of any one of the first to third aspects, the multilayer-coextruded film has a polyolefin monomaterial ratio of 75% or more in terms of mass.

A fifth aspect of the present invention is a packaging bag constituted of the packaging bag laminate of any one of the first to fourth aspects.

A sixth aspect of the present invention is a spout-attached packaging bag in which a spout is attached to the packaging bag of the fifth aspect.

A seventh aspect of the present invention is that in the spout-attached packaging bag of the sixth aspect, the spout includes a gas barrier layer.

An eighth aspect of the present invention is a content-contained spout-attached packaging bag in which contents are contained in the spout-attached packaging bag of the sixth or seventh aspect.

### [Advantageous Effects of Invention]

According to the present invention, it is possible to provide a packaging bag laminate, a packaging bag, a spout-attached packaging bag, and a content-contained spout-attached packaging bag, which are easy to material recycling and can ensure stable production of the packaging bag.

### [Brief Description of Drawings]

FIG. 1 is a cross-sectional view showing a packaging bag laminate of an example of an embodiment.
FIG. 2 is a cross-sectional view showing a laminated structure of another example of an intermediate layer.
FIG. 3 is a front view showing a spout-attached packaging bag of an example of the embodiment.
FIG. 4 is a front view showing an example of a spout.
FIG. 5 is a cross-sectional view schematically showing an example of a spout having gas barrier properties.

### [Description of Embodiments]

An example of an embodiment of the present invention is described below.

The embodiment described below shows an example of the case where the present invention is implemented, but the present invention is not limited to the specific configuration described below. When implementing the present invention, specific configurations according to the embodiment may be appropriately adopted.

The dimensions or the like of the drawings shown in the following description are merely examples, and the present invention is not necessarily limited to them but can be implemented with appropriate changes within the scope of the present invention.

### [Packaging Bag Laminate]

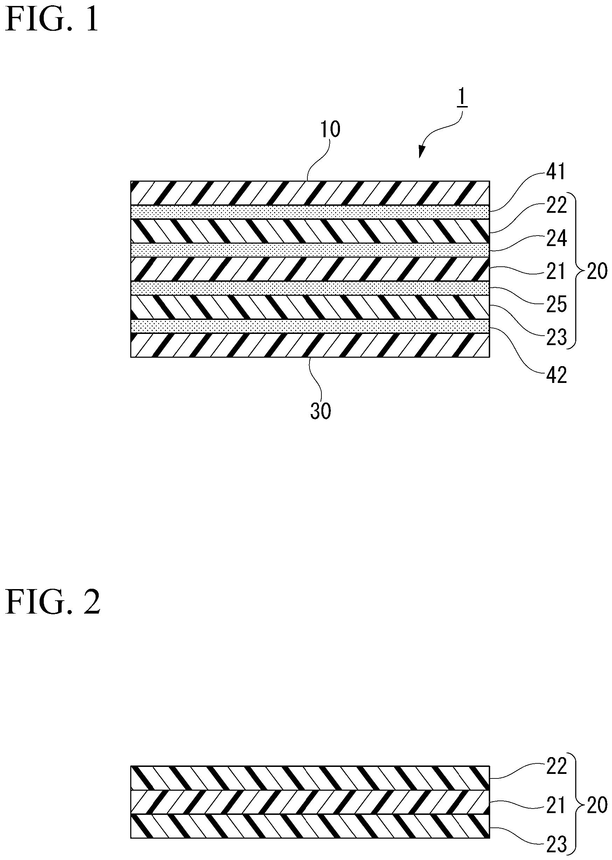

As shown in FIG. 1, a packaging bag laminate 1 of the present embodiment is made of plastic films and includes a base layer 10, an intermediate layer 20, and a sealant layer 30 that are laminated in this order.

In a packaging bag using the packaging bag laminate 1, the base layer 10 forms the outer surface of the packaging bag, and the sealant layer 30 having heat sealability forms the inner surface of the packaging bag. The intermediate layer 20 is a layer disposed between the base layer 10 and the sealant layer 30. In the description of each layer, a surface facing the outside of the packaging bag may be merely referred to as "outer side", and a surface facing the inside of the packaging bag may be merely referred to as "inner side".

In the example shown in FIG. 1, in the packaging bag laminate 1, the base layer 10 and the intermediate layer 20 are laminated through an adhesive layer 41, and the intermediate layer 20 and the sealant layer 30 are laminated through an adhesive layer 42. That is, the packaging bag laminate 1 has a laminated structure in which the base layer 10, the adhesive layer 41, the intermediate layer 20, the adhesive layer 42, and the sealant layer 30 are laminated in this order.

In the following description, the laminated structure of the example shown in FIG. 1 is also referred to as "base layer 10 / adhesive layer 41 / intermediate layer 20 / adhesive layer 42 / sealant layer 30", and other laminated structures are also referred to in the same manner.

### (Base Layer)

The base layer 10 is constituted of a stretched film (hereinbelow, also referred to as "stretched PP film") made of polypropylene.

The stretching process improves the strength of the film, such as tensile strength and rigidity. Particularly, the improved rigidity limits extension when tension or heat is applied to the base layer 10, thereby further improving printability and processing suitability such as bag production suitability.

The stretching process includes uniaxial stretching in which the film is stretched in either the longitudinal or width direction during the film production process, and biaxial stretching in which the film is stretched in both of the longitudinal and width directions during the film production process.

The stretching process for the stretched PP film to be used for the base layer 10 may be uniaxial stretching or biaxial stretching. In the case of biaxial stretching, it may be sequential biaxial stretching or simultaneous biaxial stretching.

The stretched PP film used for the base layer 10 may contain known additives such as stabilizers, antioxidants, lubricants, antistatic agents, or colorants.

From the viewpoint of improving productivity, the thickness of the base layer 10 is preferably 10 µm or more and is more preferably 20 µm or more. From the viewpoint of improving processing suitability, the thickness of the base layer 10 is preferably 70 µm or less and is more preferably 60 µm or less. The lower and upper limits of the thickness of the base layer 10 can be arbitrarily combined, and for example, 10 to 70 µm is preferable.

The melting point of the base layer 10 is preferably higher than that of at least the sealant layer 30. When the melting point of the base layer 10 is higher than that of the sealant layer 30, the sealant layer 30 melts before the base layer 10 melts in the bag production process or the spout attachment process that uses a heat sealing machine. Therefore, it is possible to produce high-quality packaging bags and spout-attached packaging bags that are without curling (warping) or wrinkles caused by thermal shrinkage of each sealed part and have excellent compression-resistance strength and impact resistance.

Specifically, the melting point of the base layer 10 is preferably 155°C to 175°C.

The difference between the melting points of the base layer 10 and the sealant layer 30 is preferably 20°C to 85°C.

### (Ink Layer)

An ink layer may be provided on the outer side or the inner side of the base layer 10 as necessary.

The methods of forming the ink layer include gravure printing method, offset printing method, flexographic printing method, and the like. Among these printing methods, the gravure printing method is preferable because it has excellent color reproducibility.

The ink layer is formed by printing characters and figures related to the contents, decorations, reference signs for management, and the like. When concealment is required, by providing, for example, a gray concealing ink layer, it is possible to prevent the color of the contents from being transmitted through the packaging bag when the packaging bag is filled with the contents. In addition to the above-described gray, the concealing ink layer may have another color as long as the other color can perform concealing. Two or more concealing ink layers may be provided as necessary.

### (Intermediate Layer)

The intermediate layer 20 is constituted of a multilayer-coextruded film (hereinbelow, also referred to as the "multilayer-coextruded film (A)") that includes a gas barrier resin layer, and support layers laminated on two sides of the gas barrier resin layer and mainly made of polyolefin. That is, the intermediate layer 20 is constituted of an unstretched film in which the support layer is laminated on each of two sides of the gas barrier resin layer. However, the support layer "mainly made of polyolefin" means that the polyolefin content to the total mass of the support layer is 50% by mass or more.

An adhesive resin layer may be provided between the support layer and the gas barrier resin layer.

In the example shown in FIG. 1, the intermediate layer 20 is constituted of a multilayer-coextruded film (A) having a laminated structure of support layer 22 / adhesive resin layer 24 / gas barrier resin layer 21 / adhesive resin layer 25 / support layer 23. The multilayer-coextruded film (A) constituting the intermediate layer 20 is not limited to the five-layered structure shown in FIG. 1 but may have a three-layered structure of support layer 22 / gas barrier resin layer 21 / support layer 23 shown in FIG. 2.

The strength of a plastic film, such as tensile strength and rigidity, is improved by performing the stretching process on the film as described above, but on the other hand, the flexibility of the film is decreased, so the impact absorption may be decreased.

The packaging bag laminate, in which a multilayer-coextruded film (A) that is an unstretched film is used for the intermediate layer 20, has higher impact absorption than a packaging bag laminate in which a stretched film is used for the intermediate layer 20. Therefore, when an instantaneous stress such as a drop impact acts on the packaging bag laminate of the present invention, the packaging bag laminate has an effect of dispersing the stress and has excellent impact resistance. The packaging bag laminate of the present invention also has excellent compression-resistance strength because the multilayer-coextruded film (A) is used for the intermediate layer 20.

The gas barrier resin layer 21 functions as a layer that mainly blocks the permeation of gas such as oxygen through the packaging bag laminate 1.

Examples of materials constituting the gas barrier resin layer 21 include ethylene-vinyl alcohol copolymer (EVOH), vinyl alcohol polymer (PVA), and polyamide using metaxylenediamine. Among these, EVOH is preferable as the material constituting the gas barrier resin layer 21 from the viewpoint of processing suitability, gas barrier properties, and universality. The material constituting the gas barrier resin layer 21 may be of one type, or two or more types.

EVOH is a polymer obtained by saponification of ethylene-vinyl acetate copolymer. The oxygen permeability of EVOH is less than that of polyethylene, so the gas barrier resin layer 21 using EVOH mainly functions as a layer that limits the permeation of gas such as oxygen.

The lower the content percentage of ethylene units of EVOH is, the more molecular cohesion force due to the hydrogen bond acts because the structure of EVOH is close to PVA, thereby exhibiting excellent oxygen barrier properties. The "ethylene unit" means a repeating unit derived from ethylene in the polymer.

The content percentage of the ethylene units of the EVOH is preferably 20 mol% or more, and is more preferably 25 mol% or more, with respect to the total units of the EVOH. When the content percentage of the ethylene units is 20 mol% or more, the thermal stability is good, the moldability is excellent, foreign matter such as gels is less likely to occur during extrusion melt molding, and the film tends to be less likely to tear during stretch molding. The content percentage of the ethylene units of the EVOH is preferably 70 mol% or less, and is more preferably 50 mol% or less. When the content percentage of the ethylene units is 70 mol% or less, sufficient gas barrier properties tend to be easily obtained. The lower and upper limits for the content percentage of the ethylene units of the EVOH can be arbitrarily combined, for example, 20 to 70 mol% is preferable, and 25 to 50 mol% is more preferable.

Specific examples of the EVOH include "EVAL" manufactured by Kuraray Co., Ltd. and "Soarnol" manufactured by Mitsubishi Chemical Corporation.

From the viewpoint of improving the gas barrier properties against oxygen and the like, the thickness of the gas barrier resin layer 21 is preferably 3 µm or more, and is more preferably 4 µm or more. From the viewpoint of the material recyclability, the thickness of the gas barrier resin layer 21 is preferably 30 µm or less, and is more preferably 20 µm or less. The lower and upper limits for the thickness of the gas barrier resin layer 21 can be arbitrarily combined, and for example, 3 to 30 µm is preferable.

Examples of the polyolefin constituting the support layers 22 and 23 include low density polyethylene (LDPE), medium density polyethylene (MDPE), high density polyethylene (HDPE, density: 0.940 to 0.970 g/cm³), linear low density polyethylene (LLDPE), and polypropylene. The polypropylene (density: 0.890 to 0.910 g/cm³) includes homopolypropylene, random polypropylene, and block polypropylene.

Among these, HDPE in which the melting point thereof is high or polypropylene is preferable for the support layers 22 and 23. The polyolefin constituting the support layers 22 and 23 may be of one type, or two or more types.

In the case where HDPE or polypropylene is used for the support layers 22 and 23, the heat resistance and rigidity thereof are higher than the case where, for example, LLDPE is used for the support layers 22 and 23. Thereby, dimensional fluctuations in the packaging bag laminate 1 due to the influence of heat and tension during bag production are limited, so problems such as pattern misalignment during the production of the packaging bag are less likely to occur. When HDPE or polypropylene is used for the support layers 22 and 23, better water vapor barrier properties are obtained than the case where polyethylene other than HDPE is used. As a result, the moisture contained in the contents is limited from penetrating and being lost to the outside of the packaging bag during the storage period, and thus the quality of the contents can be maintained in a better condition for a longer period of time. Even when the packaging bag using the packaging bag laminate 1 is boiled, the gas barrier resin layer 21 can be protected from steam.

The support layers 22 and 23 may contain a resin other than polyolefin. Examples of the resin other than polyolefin include elastomers such as ethylene-1-butene random copolymer and ethylene-propylene random copolymer. When the support layers 22 and 23 contain a resin other than polyolefin, the resin other than polyolefin may be of one type, or two or more types.

The support layers 22 and 23 may also contain known additives such as stabilizers, antioxidants, lubricants, antistatic agents, and colorants.

The content of the polyolefin in the support layer 22 is 50% by mass or more, is preferably 85% by mass or more, is more preferably 90% by mass or more, and is even more preferably 95% by mass or more, with respect to the total mass of the support layer 22. When the content of the polyolefin in the support layer 22 is equal to or greater than the above lower limit, the material recycling is facilitated. The upper limit for the content of the polyolefin in the support layer 22 is not particularly limited, and may be, for example, 100% by mass.

The content of the polyolefin in the support layer 23 is similar to that in the support layer 22. The content of the polyolefin in the support layer 23 and the content of the polyolefin in the support layer 22 may be equal or different, but it is preferable that they be equal.

From the viewpoint of improving the productivity, the thickness of the support layer 22 is preferably 10 µm or more, and is more preferably 20 µm or more. From the viewpoint of improving the processing suitability, the thickness of the support layer 22 is preferably 50 µm or less, and is more preferably 40 µm or less. The lower and upper limits for the thickness of the support layer 22 can be arbitrarily combined, and for example, 10 to 50 µm is preferable.

The thickness of the support layer 23 is similar to that of the support layer 22. The thickness of the support layer 23 and the thickness of the support layer 22 may be equal or different, but it is preferable that they be equal.

The adhesive resin constituting the adhesive resin layers 24 and 25 is preferably polyolefin-based adhesive resin made by chemically bonding ethylene-based resin or propylene-based resin with monobasic unsaturated fatty acid, ester compound of monobasic unsaturated fatty acid, anhydride of dibasic fatty acid, or the like.

Examples of the ethylene-based resin include LLDPE, LDPE, and ethylene-vinyl acetate copolymer (EVA). Examples of the propylene-based resin include propylene homopolymer, and copolymer of propylene with other α-olefin. Examples of the monobasic unsaturated fatty acid include acrylic acid, and methacrylic acid. Examples of the ester compound of monobasic unsaturated fatty acid include methyl acrylate, methyl methacrylate, and glycidyl methacrylate. Examples of the anhydride of dibasic fatty acid include anhydrides of maleic acid, fumaric acid, itaconic acid, and the like.

Specific examples of the adhesive resin include "ADMER" manufactured by Mitsui Chemicals, Inc. and "Modic" manufactured by Mitsubishi Chemical Corporation.

The adhesive resin constituting the adhesive resin layers 24 and 25 may be of one type, or two or more types.

The thickness of the adhesive resin layer 24 is preferably 1 to 10 µm, and is more preferably 3 to 7 µm. The thickness of the adhesive resin layer 25 is similar to that of the adhesive resin layer 24. The thickness of the adhesive resin layer 25 and the thickness of the adhesive resin layer 24 may be equal or different, but it is preferable that they be equal.

From the viewpoint of the material recyclability, the polyolefin monomaterial ratio of the intermediate layer 20, i.e., the polyolefin monomaterial ratio of the multilayer-coextruded film (A), is preferably 75% or more in terms of mass, and is more preferably 80% by mass or more. However, the "monomaterial ratio" refers to the mass ratio of a single material to the total mass. The "polyolefin monomaterial ratio of the intermediate layer" refers to the ratio of polyolefin to the multilayer-coextruded film (A) (resin material) used for the intermediate layer in terms of mass.

From the viewpoint of improving the productivity, the thickness of the intermediate layer 20 is preferably 25 µm or more, and is more preferably 50 µm or more. From the viewpoint of improving the processing suitability, the thickness of the intermediate layer 20 is preferably 150 µm or less, and is more preferably 114 µm or less. The lower and upper limits for the thickness of the intermediate layer 20 can be arbitrarily combined, and for example, 25 to 150 µm is preferable.

The sealant layer 30 is a layer constituted of a film made of one or more materials selected from ethylene homopolymer or ethylene copolymer.

Examples of monomers copolymerizable with ethylene include α-olefin other than ethylene, such as propylene, 1-butene, 1-hexene, and 1-octene, and vinyl ester such as vinyl acetate, acrylic acid, methacrylic acid, methyl methacrylate, and methyl acrylate.

The content percentage of α-olefin units in the ethylene copolymer is preferably 2 to 10 mol%, and is more preferably 4 to 6 mol%, with respect to the total units of the ethylene copolymer. The content percentage of vinyl ester units in the ethylene copolymer is preferably 2 to 12 mol%, and is more preferably 4 to 10 mol%, with respect to the total units of the ethylene copolymer.

The sealant layer 30 may be, for example, an unstretched film made of one or more materials selected from the group consisting of LDPE, MDPE, LLDPE, HDPE, ionomer resin, EVA, ethylene-acrylic acid copolymer, ethylene-methyl methacrylate copolymer, ethylene-methyl acrylate copolymer, ethylene-methacrylic acid copolymer, and the like.

The unstretched film constituting the sealant layer 30 may be a single layer film or a multilayer film.

The sealant layer 30 may also contain known additives such as stabilizers, antioxidants, lubricants, antistatic agents, and colorants.

From the viewpoint of improving the productivity, the thickness of the sealant layer 30 is preferably 20 µm or more, and is more preferably 30 µm or more. From the viewpoint of improving the processing suitability, the thickness of the sealant layer 30 is preferably 200 µm or less, and is more preferably 150 µm or less. The lower and upper limits for the thickness of the sealant layer 30 can be arbitrarily combined, and for example, 20 to 200 µm is preferable.

The melting point of the sealant layer 30 is preferably 90°C to 135°C.

The adhesive layers 41 and 42 can be formed by dry lamination method or nonsolvent lamination method in which an adhesive is used for lamination, or extrusion lamination method in which molten polyethylene is extruded into a film shape from a T-die and is laminated. Among these, from the viewpoint of the adhesive strength between the base layer 10 and the intermediate layer 20, and the adhesive strength between the intermediate layer 20 and the sealant layer 30, the dry lamination method is most preferable for forming the adhesive layers 41 and 42.

The thickness of the adhesive layer 41 is preferably 2 to 20 µm. The thickness of the adhesive layer 42 is similar to that of the adhesive layer 41. The thickness of the adhesive layer 42 and the thickness of the adhesive layer 41 may be equal or different, but it is preferable that they be equal.

From the viewpoint of the material recyclability, the higher the polyolefin monomaterial ratio of the packaging bag laminate 1 is, the better it is, and the polyolefin monomaterial ratio is preferably 80% or more. A "high polyolefin monomaterial ratio" means that less residues are left during material recycling, and it is possible to perform efficient recycling.

### [Packaging Bag, Spout-Attached Packaging Bag, Content-Contained Spout-Attached Packaging Bag]

The packaging bag of the present invention is made of the packaging bag laminate of the present invention.

The configuration of the packaging bag is not particularly limited as long as the packaging bag can liquid-tightly contain contents and a spout, described below, can be adhered thereto. The packaging bag may be, for example, a side gusset bag having gussets on the sides, a bottom gusset bag (standing bag) having a gusset on the bottom, a square bottom bag having gussets on the sides and bottom, a pillow bag, a flat bag in which packaging bag laminates are sealed at three or four sides, and the like.

For producing the packaging bag, a bag production machine is used. For the method of adhering each sealed part by using the bag production machine, heat sealing method, impulse sealing method, ultrasonic sealing method and the like can be used.

In the packaging bag of the present invention, the base layer is a stretched PP film, and the sealant layer is a film made of one or more materials selected from ethylene homopolymer or ethylene copolymer. Since the packaging bag laminate having a sufficiently large difference between the melting points of the base layer and the sealant layer is used, problems due to heat shrinkage are less likely to occur during the bag production process or the like. The multilayer-coextruded film (A) that is an unstretched film is deliberately used for the intermediate layer of the packaging bag laminate, so that when the packaging bag is subjected to momentary stress such as an impact from being dropped, the packaging bag laminate itself absorbs the stress. Thereby, the stress applied to the sealed parts at the periphery of the packaging bag is reduced, and thus problems such as packaging bag bursting due to the momentary stress can be limited.

The contents to be contained in the packaging bag are not particularly limited as long as the contents have fluidity, and examples thereof include liquids such as soft drinks and juices, and fluids or pastes such as ice creams, jellies, cosmetics, shampoos, conditioners, and liquid soaps.

The packaging bag is preferably designed to be able to contain, for example, a weight of about 30 to 1500 g.

The spout-attached packaging bag of the present invention has a configuration in which a spout is attached to the packaging bag of the present invention, and includes a packaging bag that contains contents, and a spout fixed to the packaging bag.

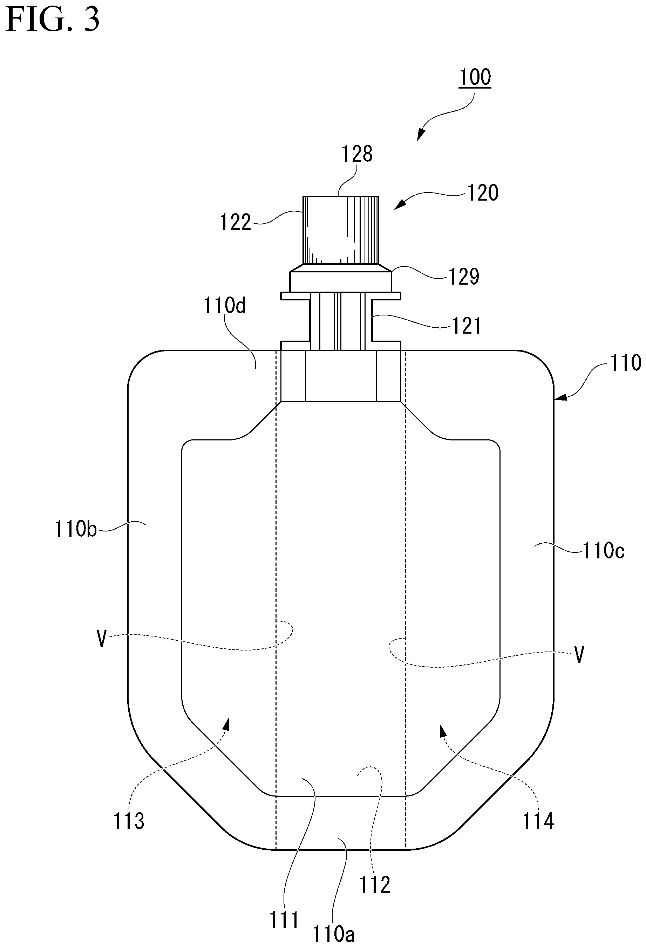

As an example, a spout-attached packaging bag 100 is shown in FIG. 3. The spout-attached packaging bag 100 includes a packaging bag 110 and a spout 120. In the spout-attached packaging bag 100, the side on which the packaging bag 110 is provided may be referred to as a lower side, and the side on which the spout 120 is provided may be referred to as an upper side.

The spout 120 includes a spout body 121 and a cap 122, and the spout body 121 is attached to an upper part of the packaging bag 110. The spout body 121 allows the contents to pass therethrough, and the cap 122 is configured to close the port (opening) of the tip of the spout body 121.

The packaging bag 110 of the example shown in FIG. 3 is a side gusset bag. That is, the packaging bag 110 is configured by sandwiching two side films 113 and 114 folded in half at creases V between a front film 111 and a rear film 112 overlapping the front film 111. The packaging bag laminate of the present invention can be used for the front film 111, the rear film 112, and the side films 113 and 114. For example, the packaging bag laminate 1 can be used for the front film 111, the rear film 112, and the side films 113 and 114.

The front film 111, the rear film 112, and the side films 113 and 114 overlapped at the lower end part of the packaging bag 110 are adhered to each other by a bottom seal 110a.

Two end parts of the front film 111 at two side parts of the packaging bag 110 and end parts of the side films 113 and 114 overlapping the two end parts of the front film 111 are adhered to each other by side seals 110b and 110c. Similarly, two end parts of the rear film 112 at the two side parts of the packaging bag 110 and end parts of the side films 113 and 114 overlapping the two end parts of the rear film 112 are adhered to each other by side seals (not shown). As a result, the side films 113 and 114 adhered between the front film 111 and the rear film 112 form side surface parts of the packaging bag 110.

At the upper end part of the packaging bag 110, a top seal 110d is formed, which adheres the front film 111, the rear film 112, and the side films 113 and 114 to each other in the state where the spout 120 is sandwiched therebetween at the center part of the upper end part in a width direction (direction orthogonal to the up-down direction and along the front surface or the rear surface of the packaging bag 110).

The spout-attached packaging bag of the present invention is not limited to the spout-attached packaging bag 100.

The spout-attached packaging bag can be produced by inserting a spout into an opening of a packaging bag produced by the bag production machine and adhering the spout to the packaging bag by a spout attachment machine. For the method of adhering the spout in the spout attachment machine, heat sealing method, impulse sealing method, ultrasonic sealing method or the like can be used.

The higher the polyolefin monomaterial ratio of the packaging bag, the better, and it is preferably 80% or more. The higher the polyolefin monomaterial ratio of the spout-attached packaging bag, the better, and it is preferably 90% or more.

The polyolefin monomaterial ratio of the packaging bag is the ratio of polyolefin, calculated by mass, to the materials used for the packaging bag. The polyolefin monomaterial ratio of the spout-attached packaging bag is the ratio of polyolefin, calculated by mass, to the materials used for the spout-attached packaging bag. That is, the polyolefin monomaterial ratio of the spout-attached packaging bag includes the spout.

When the polyolefin monomaterial ratio of the spout-attached packaging bag of the present invention is 90% or more, it is possible to satisfy the guideline of "flexible packaging containers containing 90% or more ratio polyolefin", which is preferred by Circular Economy for Flexible Packaging (CEFLEX), a consortium (joint venture) that aims to realize a recycling society in the flexible packaging field in Europe, and it is possible to provide flexible packaging containers that are easy to perform material recycling.

### (Spout)

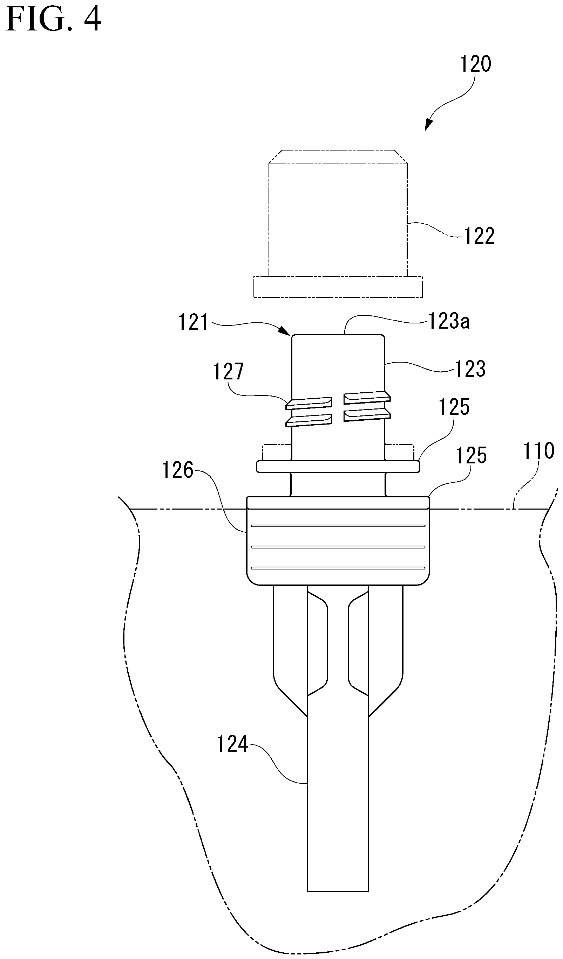

The spout is described below in detail. The spout 120 of the example shown in FIGS. 3 and 4 includes the spout body 121 and the cap 122.

The spout body 121 includes a cylindrical pour part 123 formed at the upper part of the spout body 121, one end of which forms an opening 123a, and a long, thin cylindrical straw part 124 that is below the pour part 123. A two-tiered pedestal 125 that projects horizontally outward from the outer peripheral part of the pour part 123 is provided between the pour part 123 and the straw part 124. The straw part 124 below the lower tier of the pedestal 125 is provided with an attachment part 126 that is adhered to the upper end of the packaging bag 110.

The straw part 124 formed at the lower part of the spout body 121 is formed into a long, thin cylindrical shape and is inserted into the packaging bag 110. The straw part 124 has an opening at the lower end thereof.

The attachment part 126 is formed to project to the left and right in the width direction of the packaging bag. The upper end of the packaging bag 110 is adhered to the outer surface of the attachment part 126, and they are liquid-tightly adhered by the heat sealing method or the like such that no gap is formed therebetween.

The pour part 123 positioned at the upper part of the spout body 121 is formed into a cylindrical shape, and the outer peripheral surface thereof is provided with a helical male thread 127. The male thread 127 engages with a female thread formed in the cap 122 and is used for screwing the cap 122 on the pour part 123. Thereby, the cap 122 is detachably attached to the pour part 123 and can close the pour part 123.

The cap 122 is composed of a cap body 128 formed into a cylindrical shape and a band 129 provided to project outward from the outer periphery of the cap body 128 at the lower end of the cap body 128 and to extend in the circumferential direction of the cap 122.

The cap body 128 is formed into a cylindrical shape with an upper surface, one end in the direction along the central axis thereof, being closed and a lower part, the other end, being open as an opening, which can cover the pour part 123. The inner peripheral surface of the cap body 128 is provided with the helical female thread, and the cap body 128 is configured to screw the female thread on the male thread 127 formed on the outer peripheral surface of the pour part 123.

A seal body (not shown) formed into a cylindrical shape in the area radially inward from the inner peripheral surface of the peripheral wall of the cap body 128 projects downward from the inner side (lower surface) of the upper part of the cap body 128. By bringing the inner peripheral surface of the pour part 123 into close contact with the outer surface of the seal body when the cap is screwed on the pour part, the seal body prevents the contents from leaking out.

From the viewpoint of the material recyclability, polyethylene is preferable as the material constituting the spout body 121 and the cap 122 of the spout 120.

Examples of the polyethylene constituting the spout body 121 and the cap 122 include LDPE, MDPE, HDPE and LLDPE, and from the viewpoint of strength or the like, HDPE is particularly preferable.

The spout 120 can be formed by a known molding method such as injection molding or compression molding.

From the viewpoint of the gas barrier properties, it is preferable that the spout include a gas barrier layer. In more detail, it is preferable that the spout body include a gas barrier layer.

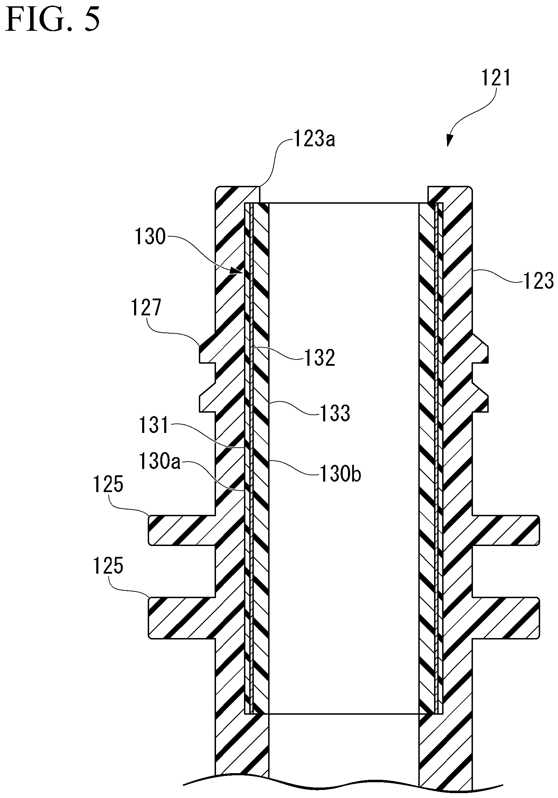

For example, the inside of the spout body 121 of the example shown in FIG. 5 is fitted with a cylindrical body 130 having a laminated structure of, from the outer side in order, outer layer 131 / adhesive layer (not shown) / gas barrier layer 132 / adhesive layer (not shown) / inner layer 133. When the cylindrical body 130 having this structure is fitted into the spout body 121, it is possible to impart gas barrier properties to the spout 120. The cylindrical body 130 is disposed inside the pour part 123 coaxially with the pour part 123.

When the spout body 121 has the gas barrier properties, it is possible to prevent deterioration such as oxidation of the contents during the storage period, and changes in concentration and weight of the contents caused by evaporation of moisture contained in the contents. Particularly, in the case where the packaging bag contains highly viscous liquid contents, the contents may retain in the pour part 123. Even in such a case, since the spout body 121 has the gas barrier properties, it is possible to prevent the contents retaining in the pour part 123 from oxidizing or browning.

Examples of the material constituting the gas barrier layer 132 include EVOH, PVA, and polyamide using metaxylenediamine. Among these, EVOH is preferable as the material constituting the gas barrier layer 132 from the viewpoint of processing suitability, gas barrier properties, and universality. The material constituting the gas barrier layer 132 may be one type, or two or more types.

Polyethylene is preferable as the material constituting the outer layer 131 and the inner layer 133 from the viewpoint of the material recyclability. Examples of the polyethylene constituting the outer layer 131 and the inner layer 133 include LDPE, MDPE, HDPE, and LLDPE, and from the viewpoint of water vapor permeability and rigidity, HDPE is preferable. Since the water vapor permeability of the cylindrical body 130 is decreased by selecting HDPE, it is possible to limit the gas barrier properties of the gas barrier layer 132 from deteriorating due to the influence of moisture contained in the contents or moisture contained in the outside air. The material constituting the outer layer 131 and the inner layer 133 may be one type, or two or more types.

In the cylindrical body 130, the thickness of the inner layer 133 may be the thickest at least among the layers forming the cylindrical body 130. When the inner layer 133 is thick, the water vapor permeability of the inner layer 133 is decreased, and the gas barrier layer 132 is less susceptible to the influence of the humidity of the contents, so the gas barrier properties of the gas barrier layer 132 are limited from deteriorating. When the gas barrier layer 132 is disposed to be closer to the outer peripheral surface 130a of the cylindrical body 130, the gas barrier layer 132 is less susceptible to the influence of the contents compared to the case where the gas barrier layer 132 is disposed to be closer to the inner peripheral surface 130b of the cylindrical body 130.

When the thickness of the gas barrier layer 132 is not large, and the thicknesses of the outer layer 131 and the inner layer 133 are large, moisture is less likely to reach the gas barrier layer 132, and the performance of the gas barrier layer 132 is more easily maintained. From the viewpoint of not only gas barrier properties but also material recyclability, it is preferable that the thicknesses of the outer layer 131 and the inner layer 133 be greater than that of the gas barrier layer 132.

The thickness of the gas barrier layer 132 is preferably 10 to 300 µm and is more preferably 20 to 250 µm.

The thickness of the outer layer 131 is preferably 50 to 300 µm and is more preferably 100 to 250 µm.

The thickness of the inner layer 133 is preferably 150 to 500 µm and is more preferably 200 to 400 µm.

The thickness of the inner layer 133 is preferably at least 1.3 times the thickness of the outer layer 131.

For the adhesive constituting the adhesive layer adhering the outer layer 131 and the gas barrier layer 132, and the adhesive layer adhering the gas barrier layer 132 and the inner layer 133, the same adhesive resin as that constituting the adhesive resin layers 24 and 25 can be exemplified.

The thickness of the adhesive layer is preferably 10 to 50 µm and is more preferably 15 to 40 µm.

The cylindrical body 130 can be formed by, for example, extrusion molding. More specifically, a long member formed by the extrusion molding is cut to have a predetermined length, thereby forming the cylindrical body 130.

The present invention is not limited to the above-described embodiment.

For example, a packaging bag laminate may be formed by replacing the five-layered intermediate layer of the packaging bag laminate 1 with the three-layered intermediate layer 20 shown in FIG. 2, and by using this packaging bag laminate, a packaging bag, a spout-attached packaging bag, and a content-contained spout-attached packaging bag may be formed.

Instead of the form of the packaging bag 110 that is a side gusset bag, a packaging bag, a spout-attached packaging bag, and a content-contained spout-attached packaging bag having another form such as a bottom gusset bag may be formed.

Within the scope of the present invention, the components of the above-described embodiment may be appropriately replaced with well-known components, and the above-described modifications may be appropriately combined together.

### [Practical Example]

The present invention is specifically described below using a practical example but is not limited to the following description.

### (Multilayer-Coextruded Film (A))

Multilayer-coextruded films (A) used for the present example are shown below.

A multilayer-coextruded film A-1: a multilayer-coextruded film with a total thickness of 70 µm, having a laminated structure of HDPE layer (thickness 25 µm) / adhesive resin layer (thickness 5 µm) / EVOH layer (thickness 10 µm) / adhesive resin layer (thickness 5 µm) / HDPE layer (thickness 25 µm)

A multilayer-coextruded film A-2: a multilayer-coextruded film with a total thickness of 68 µm, having a laminated structure of LLDPE layer (thickness 25 µm) / adhesive resin layer (thickness 5 µm) / EVOH layer (thickness 8 µm) / adhesive resin layer (thickness 5 µm) / LLDPE layer (thickness 25 µm)

A multilayer-coextruded film A-3: a multilayer-coextruded film with a total thickness of 68 µm, having a laminated structure of PP layer (thickness 25 µm) / adhesive resin layer (thickness 5 µm) / EVOH layer (thickness 8 µm) / adhesive resin layer (thickness 5 µm) / PP layer (thickness 25 µm)

### [Practical Example 1]

### (1) Preparation of Packaging Bag Laminate

A biaxially oriented PP film (OPP, thickness 30 µm) was prepared as the base layer, and the corona-treated surface of the OPP was printed using a gravure printing machine. A general-purpose aliphatic ester adhesive was applied to the printed surface of the OPP using a tandem dry laminating machine, the film was laminated with the multilayer-coextruded film A-1 (thickness 68 µm) to be used as the intermediate layer, a general-purpose aliphatic ester adhesive was further applied thereto, and an LLDPE film (thickness 70 µm) was laminated thereon as the sealant layer. After aging under predetermined conditions, the film was slit to have a predetermined width using a slitter machine, thereby obtaining a rolled packaging bag laminate.

### (2) Production of Spout-Attached Packaging Bag

Using the obtained packaging bag laminate, a standing bag-type packaging bag having a bottom gusset was produced by a standing bag production machine. The dimensions of the packaging bag in a flattened state were a vertical (height) length of 140 mm, a width of 85 mm, and a vertical length of the bottom gusset (length from the lower end to the crease) of 25 mm. Thereafter, a spout was inserted into the standing bag from the opening thereof, and the spout was attached using a spout attachment machine to obtain a spout-attached packaging bag.

The temperature settings of heat sealing devices of the bag production machine and the spout attachment machine were set to conditions that allowed the sealant layer to be heat-sealed.

### [Practical Examples 2, 3 and Comparative Example 1]

Packaging bag laminates were obtained in the same manner as in Practical Example 1, except that the laminated structure of the packaging bag laminate was changed as shown in Table 1. Spout-attached packaging bags were obtained in the same manner as in Practical Example 1, except that the obtained packaging bag laminates were used.

The laminated structure and the polyolefin monomaterial ratio of the packaging bag laminate for each example are shown in Table 1. The polyolefin monomaterial ratios of the packaging bag and the spout-attached packaging bag for each example are shown in Table 2.

"//" in Table 1 means an adhesive layer made of the aliphatic ester adhesive applied during the lamination in dry lamination method. "OPP" means a biaxially oriented polypropylene film. "CPP" means an unstretched polypropylene film produced by a casting method.

**[Table 1]**

| | LAMINATED STRUCTURE OF PACKAGING BAG LAMINATE | MONOMATERIAL RATIO (%) | MELTING POINT OF BASE LAYER (°C) | MELTING POINT OF SEALANT LAYER (°C) |
|---|---|---|---|---|
| PRACTICAL EXAMPLE 1 | OPP (30 µm) / ink // multilayer-coextruded film A-1 (70 µm) // LLDPE film (70 µm) | 87.9 | 172 | 108 |
| PRACTICAL EXAMPLE 2 | OPP (30 µm) / ink // multilayer-coextruded film A-2 (68 µm) // LLDPE film (70 µm) | 89.2 | 172 | 108 |
| PRACTICAL EXAMPLE 3 | OPP (30 µm) / ink // multilayer-coextruded film A-3 (68 µm) // LLDPE film (70 µm) | 87.7 | 172 | 108 |
| COMPARATIVE EXAMPLE 1 | OPP (30 µm) / ink // PVA-coated OPP (15 µm) // CPP (70 µm) | 91.5 | 164 | 160 |

**[Table 2]**

| | MONOMATERIAL RATIO (%) | |
|---|---|---|
| | PACKAGING BAG | SPOUT-ATTACHED PACKAGING BAG |
| PRACTICAL EXAMPLE 1 | 87.9 | 93.5 |
| PRACTICAL EXAMPLE 2 | 89.2 | 94.3 |
| PRACTICAL EXAMPLE 3 | 87.7 | 93.5 |
| COMPARATIVE EXAMPLE 1 | 91.5 | 94.4 |

### [Processing Suitability of Bag Production and Spout Attachment]

Each of Practical Examples 1 to 3 had a large difference between the melting points of the base layer and the sealant layer, and had good sealability. Particularly, in Practical Example 1, the heat shrinkage of the sealed parts due to the influence of heat of the sealing devices of the bag production machine and the spout attachment machine was less than Practical Example 2, the appearances of the packaging bag and the spout-attached packaging bag were good, the processing suitability was good, and the product loss during the bag production was slightly less than Practical Example 2.

On the other hand, in Comparative Example 1, since the sealant layer was polypropylene and the melting point thereof was higher than that of the sealant layers of Practical Examples 1 to 3, the temperature setting of the sealing device had to be comparatively high by 10°C to 20°C, since the melting points of the base layer and the sealant layer were close, as a result, a warp or the like occurred in the packaging bag due to the heat shrinkage of each sealed part, the appearance of the packaging bag was poor, and the processing suitability was poor.

### [Strength Evaluation]

### (1) Preparation of Experimental Samples

The spout-attached packaging bag was filled with 140 mL of tap water, was sealed with the cap, was boiled at 90°C for 30 minutes, and was then stored in a 5°C environment for one day and one night.

### (2) Compression Resistance Test

A compression resistance test was performed as follows to show the load-bearing strength (compression-resistance strength) of the spout-attached packaging bag.

The experimental sample was placed such that the flat surface part of the spout-attached packaging bag faced down, a predetermined load was applied thereto from above for one minute, and the presence or absence of leakage and bag breakage was visually checked. The load conditions were four conditions of 70 kg, 80 kg, 100 kg, and 120 kg, tests were performed in order from the lowest load condition, and the test was terminated for the experimental sample that showed leakage and bag breakage. Similar tests were performed on a total of 10 spout-attached packaging bags.

The compression resistance test is a test to check whether or not the packaging bag is resistant to various loads applied to it during the distribution process such as storage and transportation. That is, the compression resistance test is a test in which a compression load assumed to be a load during the distribution process is applied to the spout-attached packaging bag, and the presence or absence of leakage and bag breakage from the sealed part of the spout-attached packaging bag caused thereby is checked.

### (3) Bag Drop Test

One set of bag drop test included performing one surface dropping of dropping the experimental sample from a height of 1.5 m such that the longitudinal direction thereof is parallel with the horizontal direction and then performing one longitudinal dropping of dropping it such that the longitudinal direction is parallel with the vertical direction, and a maximum of five sets of bag drop tests was performed. In the surface dropping, the flat surface part of the spout-attached packaging bag touched the ground, and in the longitudinal dropping, the bottom sealed part of the spout-attached packaging bag touched the ground. The presence or absence of leakage was checked for each set, and the test was terminated when the leakage was confirmed. Similar tests were performed on a total of 10 spout-attached packaging bags.

The results of the compression resistance test for each example are shown in Table 3. In Table 3, the total number of tested samples is shown on the right side of "/", and the number of samples in which leakage and bag breakage were observed is shown on the left side of "/". For example, "0/10" means that among 10 samples, the number of samples in which leakage and bag breakage were observed is 0.

**[Table 3]**

| | COMPRESSION RESISTANCE TEST | | | |
|---|---|---|---|---|
| | 70 kg | 80 kg | 100 kg | 120 kg |
| PRACTICAL EXAMPLE 1 | 0/10 | 0/10 | 0/10 | 0/10 |
| PRACTICAL EXAMPLE 2 | 0/10 | 0/10 | 0/10 | 0/10 |
| COMPARATIVE EXAMPLE 1 | 0/10 | 0/10 | 2/10 | 5/8 |

The results of the bag drop test for each example are shown in Table 4. In Table 4, the total number of tested samples is shown on the right side of "/", and the number of samples in which leakage was observed is shown on the left side of "/". For example, "0/10" means that among 10 samples, the number of samples in which leakage was observed is 0.

**[Table 4]**

| | BAG DROP TEST | | | | |
|---|---|---|---|---|---|
| | 1^{st} SET | 2^{nd} SET | 3^{rd} SET | 4^{th} SET | 5^{th} SET |
| PRACTICAL EXAMPLE 1 | 0/10 | 0/10 | 0/10 | 0/10 | 0/10 |
| PRACTICAL EXAMPLE 2 | 0/10 | 0/10 | 0/10 | 0/10 | 0/10 |
| COMPARATIVE EXAMPLE 1 | 4/10 | 2/6 | 3/4 | 1/1 | - |

As shown in Tables 3 and 4, it was confirmed that the spout-attached packaging bags of Practical Examples 1 and 2 had satisfactory compression-resistance strength and bag dropping strength.

On the other hand, the spout-attached packaging bag of Comparative Example 1 was confirmed to have bag breakage after the first set, and the results were far from satisfactory in terms of practical durability as a packaging container that contains liquid contents.

### [Reference Signs List]

1...packaging bag laminate, 10...base layer, 20...intermediate layer, 21...gas barrier resin layer, 22, 23...support layer, 24, 25...adhesive resin layer, 30...sealant layer, 100...spout-attached packaging bag, 110...packaging bag, 111...front film, 112...rear film, 113, 114...side film, 120...spout, 121...spoutbody, 122...cap, 123...pour part, 124...straw part, 125...pedestal, 126...attachment part, 127...male thread, 128...cap body, 129...band, 130...cylindrical body, 131...outer layer, 132...gas barrier layer, 133...inner layer

## Claims

1. A packaging bag laminate, comprising: a base layer, an intermediate layer, and a sealant layer that are laminated in this order, wherein
the base layer is a stretched film made of polypropylene,
the intermediate layer is a multilayer-coextruded film including a gas barrier resin layer, and support layers laminated on two sides of the gas barrier resin layer and mainly made of polyolefin, and
the sealant layer is a film made of one or more materials selected from ethylene homopolymer or ethylene copolymer.

2. The packaging bag laminate according to claim 1, wherein the gas barrier resin layer contains ethylene-vinyl alcohol copolymer.

3. The packaging bag laminate according to claim 2, wherein the ethylene-vinyl alcohol copolymer has an ethylene unit content of 20 mol% or more and 70 mol% or less.

4. The packaging bag laminate according to any one of claims 1 to 3, wherein the multilayer-coextruded film has a polyolefin monomaterial ratio of 75% or more in terms of mass.

5. A packaging bag constituted of the packaging bag laminate according to any one of claims 1 to 4.

6. A spout-attached packaging bag in which a spout is attached to the packaging bag according to claim 5.

7. The spout-attached packaging bag according to claim 6, wherein the spout includes a gas barrier layer.

8. A content-contained spout-attached packaging bag in which contents are contained in the spout-attached packaging bag according to claim 6 or 7.
